(19)

Europäisches
Patentamt
European
Patent Office
Office européen
des brevets

(11)     **EP 4 318 278 A1**

(12)     **EUROPEAN PATENT APPLICATION**

(43) Date of publication:
**07.02.2024   Bulletin 2024/06**

(51) International Patent Classification (IPC):
***G06F 17/18*** (2006.01)

(21) Application number: **22207243.1**

(52) Cooperative Patent Classification (CPC):
**G06F 17/18;** Y02A 10/40

(22) Date of filing: **14.11.2022**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **02.08.2022   CN 202210919272**

(71) Applicant: **China Three Gorges Co., Ltd.
Wuhan Hubei 430010 (CN)**

(72) Inventors:
• **LI, Mengjie**
**Wuhan, 430010 (CN)**
• **LIANG, Lili**
**Wuhan, 430010 (CN)**
• **MOU, Hailei**
**Wuhan, 430010 (CN)**

• **YIN, Zhaokai**
**Wuhan, 430010 (CN)**
• **ZHU, Hongbing**
**Wuhan, 430010 (CN)**
• **LIU, Zhiwu**
**Wuhan, 430010 (CN)**
• **WU, Di**
**Wuhan, 430010 (CN)**
• **LIU, Kun**
**Wuhan, 430010 (CN)**
• **LU, Bei**
**Wuhan, 430010 (CN)**
• **WANG, Pengxiang**
**Wuhan, 430010 (CN)**
• **GUO, Ze'ang**
**Wuhan, 430010 (CN)**

(74) Representative: **J A Kemp LLP
80 Turnmill Street
London EC1M 5QU (GB)**

(54)     **METHOD AND APPARATUS FOR PROCESSING RUNOFF ABNORMAL ABRUPT-CHANGE DATA**

(57)     Embodiments of the present invention relate to a method and an apparatus for processing runoff abnormal abrupt-change data. The method includes: acquiring runoff observation data of a target research region within a preset historical time period, and sorting the runoff observation data by time to obtain a first runoff observation data sequence; performing first-order differential processing on the first runoff observation data sequence, to obtain a first first-order differential runoff observation data sequence; determining runoff abnormal abrupt-change data in the first first-order differential runoff observation data sequence based on a preset runoff abnormal abrupt-change data filtering condition; and correcting the runoff abnormal abrupt-change data. In this way, an abnormal abrupt-change point is recognized by setting an abrupt-change point window threshold and a fold-change threshold of a first-order differential sequence, and data correction is performed by using a linear interpolation method, to implement efficient and precise recognition and correction of runoff sequence abnormal abrupt-change data, thereby improving the cleaning and quality control efficiency of runoff abnormal abrupt-change data.

FIG. 1

EP 4 318 278 A1

**Description**

**TECHNICAL FIELD**

Embodiments of the present invention relate to the field of hydrological forecasting, and in particular, to a method and an apparatus for processing runoff abnormal abrupt-change data.

**BACKGROUND**

Runoff is the flow of rain and snowmelt on the ground surface or underground under the action of gravity. The accuracy of runoff data is related to the accuracy of flood control and drought relief as well as hydrological forecasting, and has a great impact on the calibration of hydrological model parameters and the selection of field floods. Therefore, the quality of runoff data should not be neglected. With the accumulation of a large amount of historical runoff data, the cleaning and quality control of abnormal abrupt-change data is a difficult problem nowadays.

Currently, the identification of abnormal abrupt-change data in runoff data information relies on manual selection, which is less efficient and less accurate when the amount of runoff sequence data is large.

SUMMARY

In view of this, to resolve the foregoing technical problems or some technical problems, embodiments of the present invention provide a method and an apparatus for processing runoff abnormal abrupt-change data.

According to a first aspect, the embodiments of the present invention provide a method for processing runoff abnormal abrupt-change data. The method includes:

acquiring runoff observation data of a target research region within a preset historical time period, and sorting the runoff observation data by time to obtain a first runoff observation data sequence;

performing first-order differential processing on the first runoff observation data sequence, to obtain a first first-order differential runoff observation data sequence;

determining runoff abnormal abrupt-change data in the first first-order differential runoff observation data sequence based on a preset runoff abnormal abrupt-change data filtering condition; and

correcting the runoff abnormal abrupt-change data.

In a possible implementation, the method further includes:

presetting a fold-change threshold and an abrupt-change window threshold; and
determining top abrupt-change data in the first first-order differential runoff observation data sequence based on the fold-change threshold and the abrupt-change window threshold.

In a possible implementation, the method further includes:

determining an abrupt-change point satisfying a preset condition in the first first-order differential runoff observation data sequence based on the fold-change threshold and the abrupt-change window threshold; and
determining an abrupt-change type of the abrupt-change point, and performing calculation based on an algorithm corresponding to the abrupt-change type, to obtain top abrupt-change data.

In a possible implementation, the method further includes:

labeling the top abrupt-change data as first missing data; and
correcting the first missing data by using a linear interpolation method, to obtain a corrected second runoff observation data sequence.

In a possible implementation, the method further includes:

performing first-order differential processing on a second runoff observation data sequence, to obtain a second first-order differential runoff observation data sequence;
determining flat abrupt-change data in the second first-order differential runoff observation data sequence based on the fold-change threshold and the abrupt-change window threshold.

In a possible implementation, the method further includes:

labeling the flat abrupt-change data as second missing data; and
correcting the second missing data by using a linear interpolation method, to obtain a corrected third runoff observation data sequence.

According to a second aspect, the embodiments of the present invention provide an apparatus for processing runoff abnormal abrupt-change data. The apparatus includes: an acquisition module, configured to acquire runoff observation data of a target research region within a preset historical time period, and sort the runoff observation data by time to obtain a first runoff observation data sequence;

a processing module, configured to perform first-order differential processing on the first runoff observation data sequence, to obtain a first first-order differential runoff observation data sequence;
a determination module, configured to determine runoff abnormal abrupt-change data in the first first-order differential runoff observation data sequence based on a preset runoff abnormal abrupt-change data filtering condition; and
a correction module, configured to correct the runoff abnormal abrupt-change data.

In a possible implementation, the determination module is further configured to preset a fold-change threshold and an abrupt-change window threshold; and determine top abrupt-change data in the first first-order differential runoff observation data sequence based on the fold-change threshold and the abrupt-change window threshold.

According to a third aspect, the embodiments of the present invention provide a computer device, including: a processor and a memory, where the processor is configured to execute a program for processing runoff abnormal abrupt-change data stored in the memory to implement the method for processing runoff abnormal abrupt-change data in the foregoing first aspect.

According to a fourth aspect, the embodiments of the present invention provide a storage medium, with one or more programs stored therein, where the one or more programs are executable by one or more processors, to implement the method for processing runoff abnormal abrupt-change data in the foregoing first aspect.

In the solution for processing runoff abnormal abrupt-change data provided in the embodiments of the present invention, runoff observation data of a target research region within a preset historical time period is acquired, and the runoff observation data is sorted by time to obtain a first runoff observation data sequence; first-order differential processing is performed on the first runoff observation data sequence, to obtain a first first-order differential runoff observation data sequence; runoff abnormal abrupt-change data is determined in the first first-order differential runoff observation data sequence based on a preset runoff abnormal abrupt-change data filtering condition; and the runoff abnormal abrupt-change data is corrected. Compared with the problem in the existing technology that the identification of abnormal abrupt-change data in runoff data information relies on manual selection, which is less efficient and less accurate when the amount of runoff sequence data is large, in this solution, an abnormal abrupt-change point is recognized by setting an abrupt-change point window threshold and a fold-change threshold of a first-order differential sequence, and data correction is performed by using a linear interpolation method, to implement efficient and precise recognition and correction of runoff sequence abnormal abrupt-change data, thereby improving the cleaning and quality control efficiency of runoff abnormal abrupt-change data.

## BRIEF DESCRIPTION OF THE DRAWING

FIG. 1 is a schematic flowchart of a method for processing runoff abnormal abrupt-change data according to an embodiment of the present invention;
FIG. 2 is a schematic flowchart of another method for processing runoff abnormal abrupt-change data according to an embodiment of the present invention;
FIG. 3 is a schematic diagram of original runoff data according to an embodiment of the present invention;
FIG. 4 is a schematic diagram of runoff data after the first time of correction according to an embodiment of the present invention;
FIG. 5 is a schematic diagram of runoff data after a second time of correction according to an embodiment of the present invention;
FIG. 6 is a schematic structural diagram of an apparatus for processing runoff abnormal abrupt-change data according to an embodiment of the present invention; and
FIG. 7 is a schematic structural diagram of a computer device according to an embodiment of the present invention.

## DETAILED DESCRIPTION OF THE EMBODIMENTS

To make the objectives, technical solutions, and advantages of the embodiments of the present invention clearer, the following clearly and completely describes the technical solutions in embodiments of the present invention with reference to the accompanying drawings in embodiments of the present invention. Apparently, the described embodiments are some rather than all of the embodiments of the present invention. All other embodiments obtained by persons of ordinary skill in the art based on the embodiments of the present invention without creative efforts shall fall within the protection scope of the present invention.

To facilitate the understanding of the embodiments of the present invention, further description is provided below with specific embodiments with reference to the accompanying drawings, and the embodiments do not constitute a limitation to the embodiments of the present invention.

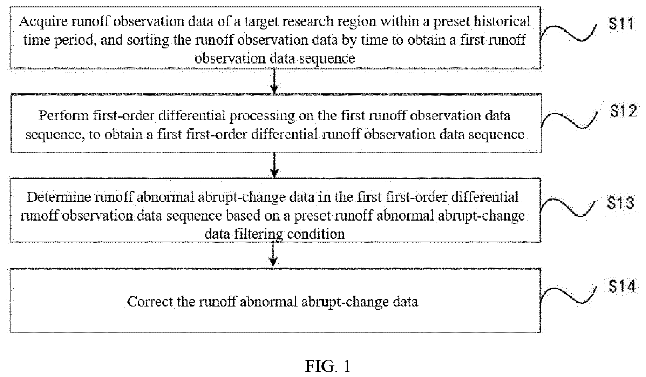

FIG. 1 is a schematic flowchart of a method for processing runoff abnormal abrupt-change data according to an embodiment of the present invention. As shown in FIG. 1, the method specifically includes the following steps.

S11: Acquire runoff observation data of a target research region within a preset historical time period, and sorting the runoff observation data by time to obtain a first runoff observation data sequence.

In the embodiments of the present invention, the acquired runoff observation data of the target research region within the preset historical time period may be runoff observation data within consecutive historical time periods, and the runoff observation data may be recorded in time order as $x_1, x_2,..., x_n$.

where $n$ is a total number of moments, to obtain the first runoff observation data sequence.

S12: Perform first-order differential processing on the first runoff observation data sequence, to obtain a first first-order differential runoff observation data sequence.

Further, first-order differential of the first runoff observation data sequence is calculated to obtain the first first-order differential runoff observation data sequence, denoted as $y_j^1$ , $j = 2,..., n$.

S13: Determine runoff abnormal abrupt-change data in the first first-order differential runoff observation data sequence based on a preset runoff abnormal abrupt-change data filtering condition.

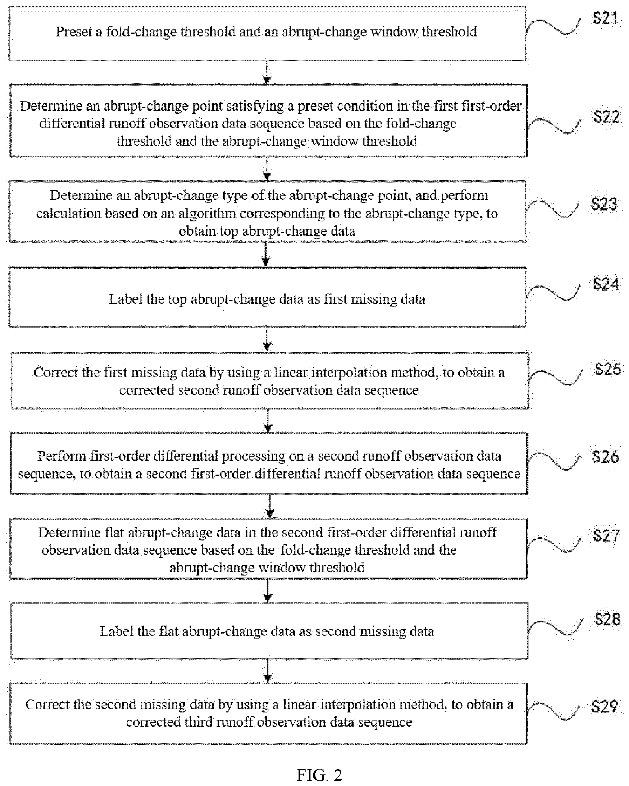

In the embodiments of the present invention, the preset runoff abnormal abrupt-change data filtering condition may be set. The filtering condition may be a set abrupt-change point window threshold and a set fold-change threshold of a first-order differential sequence. The runoff abnormal abrupt-change data is determined in the first first-order differential runoff observation data sequence according to the abrupt-change point window threshold and the fold-change threshold of a first-order differential sequence. A specific filtering method is described in detail in the embodiment corresponding to FIG. 2. Details are not described herein.

S14: Correct the runoff abnormal abrupt-change data.

Finally, the runoff abnormal abrupt-change data may be corrected a plurality of times. The number of times of correction is determined according to an actual case, and is not specifically limited in the present invention. Eventually the corrected runoff data is obtained.

In the method for processing runoff abnormal abrupt-change data provided in the embodiments of the present invention, runoff observation data of a target research region within a preset historical time period is acquired, and the runoff observation data is sorted by time to obtain a first runoff observation data sequence; first-order differential processing is performed on the first runoff observation data sequence, to obtain a first first-order differential runoff observation data sequence; runoff abnormal abrupt-change data is determined in the first first-order differential runoff observation data sequence based on a preset runoff abnormal abrupt-change data filtering condition; and the runoff abnormal abrupt-change data is corrected. Compared with the problem in the existing technology that the identification of abnormal abrupt-change data in runoff data information relies on manual selection, which is less efficient and less accurate when the amount of runoff sequence data is large, in this method, an abnormal abrupt-change point is recognized by setting an abrupt-change point window threshold and a fold-change threshold of a first-order differential sequence, and data correction is performed by using a linear interpolation method, to implement efficient and precise recognition and correction of runoff sequence abnormal abrupt-change data, thereby improving the cleaning and quality control efficiency of runoff abnormal abrupt-change data.

FIG. 2 is a schematic flowchart of another method for processing runoff abnormal abrupt-change data according to an embodiment of the present invention. As shown in FIG. 2, the method specifically includes the following steps.

S21: Preset a fold-change threshold and an abrupt-change window threshold.

In the embodiments of the present invention, the preset runoff abnormal abrupt-change data filtering condition may be set. The filtering condition may be a set abrupt-change point window threshold and a set fold-change threshold of a first-order differential sequence. The runoff abnormal abrupt-change data is determined in the first first-order differential runoff observation data sequence according to the abrupt-change point window threshold and the fold-change threshold of a first-order differential sequence.

S22: Determine an abrupt-change point satisfying a preset condition in the first first-order differential runoff observation data sequence based on the fold-change threshold and the abrupt-change window threshold.

S23: Determine an abrupt-change type of the abrupt-change point, and perform calculation based on an algorithm corresponding to the abrupt-change type, to obtain top abrupt-change data.

Specifically, the top abrupt-change data is determined by using the fold-change threshold of the first-order differential sequence and the abrupt-change window threshold. The abrupt-change window threshold may be set to *WinSize.* The fold-change threshold of the first-order differential sequence is set to *FoldNum.* A third quartile (75% quantile) in the second first-order differential runoff observation data sequence are denoted as $y_{Q_3}^1$ . If Formula 1 is satisfied:

$$|y_j^1| \geq y_{Q_3}^1, |y_{j+1}^1| \geq y_{Q_3}^1, y_j^1 \times y_{j+1}^1 < 0 \qquad \text{Formula 1.}$$

*j* is denoted as a possible abrupt-change point moment. All possible abrupt-change point moments satisfying the foregoing condition are recorded into a set *HopSet.* All possible abrupt-change points are categorized into two abrupt-change types: an upward abrupt-change point and a downward abrupt-change point. For $\forall k \in HopSet$, if $\exists j$, $k$ - *WinSize* $\leq j \leq k$ + *WinSize,* Formula 2 is satisfied:

$$|y_j^1| \geq FoldNum \times y_{Q_3}^1 \qquad \text{Formula 2.}$$

Under a condition

$$y_j^1 < 0, \quad y_{j+1}^1 > 0$$
,

apply:

$$M = max\{m: y_{k-1}^1 \leq -y_{Q_3}^1, y_{k-2}^1 \leq -y_{Q_3}^1, \ldots, y_{k-m}^1 \leq -y_{Q_3}^1, 1 \leq m \leq WinSize\} \qquad \text{Formula 3.}$$

$$N = max\{n: y_{k+1}^1 \geq y_{Q_3}^1, y_{k+2}^1 \geq y_{Q_3}^1, \ldots, y_{k+n}^1 \geq y_{Q_3}^1, 1 \leq n \leq WinSize\} \qquad \text{Formula 4.}$$

Under a condition

$$y_j^1 > 0, \quad y_{j+1}^1 < 0$$
,

apply:

$$M = max\{m: y_{k-1}^1 \geq y_{Q_3}^1, y_{k-2}^1 \geq y_{Q_3}^1, \ldots, y_{k-m}^1 \geq y_{Q_3}^1, 1 \leq m \leq WinSize\} \qquad \text{Formula 5.}$$

$$N = max\{n: y_{k+1}^1 \le -y_{Q_3}^1, y_{k+2}^1 \le -y_{Q_3}^1, ..., y_{k+n}^1 \le -y_{Q_3}^1, 1 \le n \le WinSize\}$$ Formula 6.

*{k - M, k - M + 1,..., k - 1}* and *{k + 1, k + 2,..., k + N}* are added into a moment set *TopIndex* of top abrupt-change points, where runoff data corresponding to a moment in the set is top abrupt-change data.

S24: Label the top abrupt-change data as first missing data.

S25: Correct the first missing data by using a linear interpolation method, to obtain a corrected second runoff observation data sequence.

Top abrupt-change data in an original runoff sequence $x_1$, $x_2$, ..., $x_n$ is denoted as the first missing data. The first missing data is corrected by using a linear interpolation method, to obtain a second runoff observation data sequence $qx_1$, $qx_2$,..., $qx_n$ obtained after the first runoff observation data sequence is corrected once.

S26: Perform first-order differential processing on a second runoff observation data sequence, to obtain a second first-order differential runoff observation data sequence.

First-order differential processing is performed on the second runoff observation data sequence again, where the processed data sequence is denoted as q $qy_j^1$ , *j* = 2, ..., *n*, to obtain the second first-order differential runoff observation data sequence.

S27: Determine flat abrupt-change data in the second first-order differential runoff observation data sequence based on the fold-change threshold and the abrupt-change window threshold.

Flat abrupt-change points by using the fold-change threshold and the abrupt-change window threshold corresponding to the second first-order differential runoff observation data sequence. A third quartile of $qy_j^1$ in the second first-order differential runoff observation data sequence are denoted as $qy_{Q_3}^1$ , and if Formula 7 is satisfied:

$$|qy_j^1| \ge FoldNum \times qy_{Q_3}^1$$ Formula 7.

All *j* satisfying the foregoing condition are denoted as a possible flat abrupt-change point moment set *FlatSet*. *FlatSet* = *{j_1,j_2,...,j_t}* is denoted, where there are a total of *t* moments. For k ∈ {1,2, ...,*t*}, let *k* = 1:

Step 1: Consider a set *{{j_k,...,j_t}}* *r*∈ *{k,...,t}*, and if Formula 8 is satisfied:

$$j_r \le j_k + 4 \times WinSize$$ Formula 8.

A set of all r satisfying the eighth formula is denoted as *{k_1,...,k_s}*.

Step 2: Calculate $k_M = max\{r: qy_{j_k}^1 \times qy_{j_r}^1 < 0, r = k_1, ..., k_s\}$ .

Step 3: Add $j_k$ and $j_{k_M}$ into a flat abrupt-change point set *FlatIndex.*

Step 4: Let *k* = *k* + *M* + *1*, where *M* is a rank of $k_M$ in {$k_1$,.., $k_s$}, and repeat Steps 1 to 3 above until *k* > *t*, where runoff data corresponding to a moment in the set *FlatIndex* is flat abrupt-change data.

S28: Label the flat abrupt-change data as second missing data.

S29: Correct the second missing data by using a linear interpolation method, to obtain a corrected third runoff observation data sequence.

The flat abrupt-change data in the corrected runoff sequence is denoted as the second missing data. After linear interpolation is performed, a third runoff observation data sequence after two times of correction is obtained.

Specifically, in consideration of that the number of elements in *FlatIndex* is an even number, the number of elements in *FlatIndex* is *2N,* denoted as *FlatIndex* = *{t_1,..., t_{2N}}* . For ∀*l* ∈ {1,2,..., *N*} , $qx_{t_{2l-1}}$, $qx_{t_{2l-1}+1}$, ..., $qx_{t_{2l}}$ is denoted as the second missing data. Linear interpolation is performed on the second missing data of $qx_j$, *j* = 1,..., *n*, to obtain the third runoff observation data sequence after two times of correction.

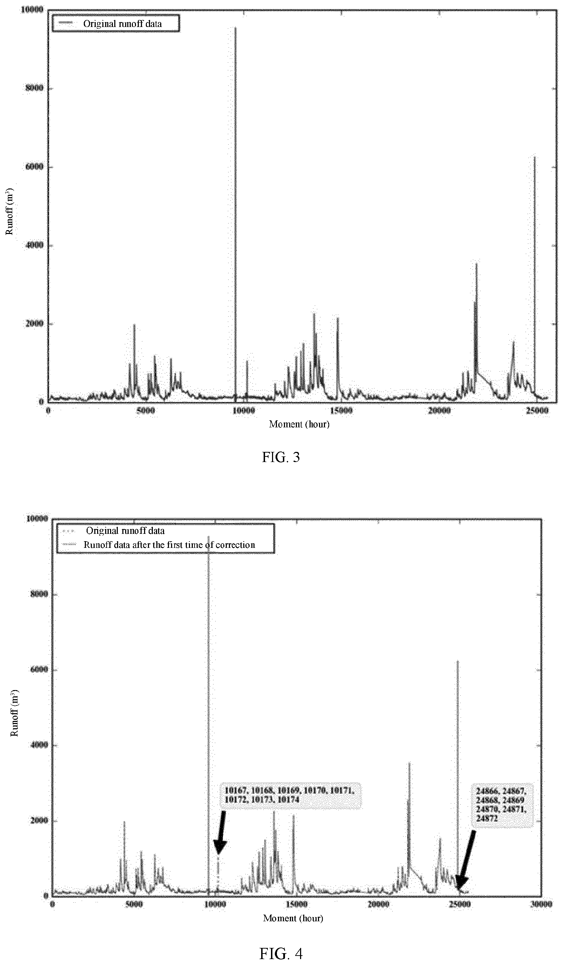

A specific embodiment is described below with reference to FIG. 3, FIG. 4, and FIG. 5.

In the embodiments of the present invention, collected actual runoff data of a hydrological station is used as an example for effect presentation. Specific implementation steps are as follows:

Step 1: Acquire runoff data. An hourly runoff data sequence $x_1, x_2,..., x_n$ of a hydrological station is acquired, where $n$ = 25537. FIG. 3 is a schematic diagram of original runoff data.

Step 2: Calculate a first-order differential of a runoff sequence. The first-order differential of the runoff sequence is denoted as $y_j^1$, $j$ = 2,...,25537.

Step 3: Search for the top abrupt-change data by using the fold-change threshold of the first-order differential sequence and the abrupt-change window threshold. It is set that the abrupt-change point window threshold is *WinSize* = 5, and the fold-change threshold of the first-order differential sequence is *FoldNum* = 150. It is obtained that a set of top abrupt-change time points is *TopIndex = {10167, 10168, 10169, 10170, 10171, 10172, 10173, 10174, 24866, 24867, 24868, 24869, 24870, 24871, 24872}*.

Step 4: Denote data corresponding to an element moment in *TopIndex* in the original runoff sequence $x_1,x_2,...,x_n$ as missing data, and correct the missing data by using a linear interpolation method, to obtain a second runoff sequence $qx_1,qx_2,...,qx_n$ after one time of correction. FIG. 4 is a schematic diagram of runoff data after the first time of correction.

Step 5: For the runoff sequence $qx_1,qx_2,...,qx_n$ after the first time of correction, calculate that a first-order differential of the runoff sequence is q $qy_j^1$, $j$ = 2,...,25537

Step 6: Search for flat abrupt-change points by using a fold-change threshold and an abrupt-change window threshold of the first-order differential sequence after the first time of correction, to obtain that an eventual flat abrupt-change point moment set is *FlatIndex* = {9574, 9585, 24874, 24881}.

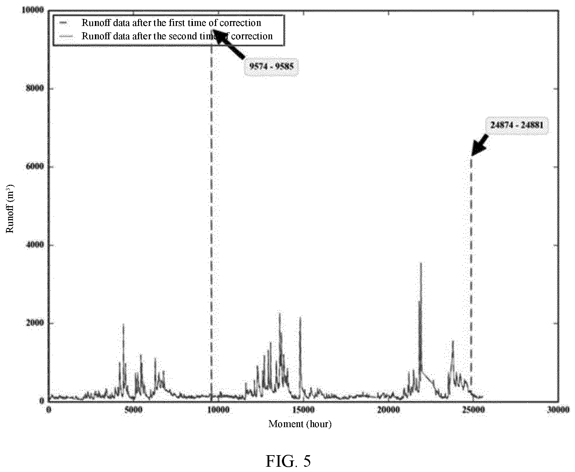

Step 7: Set the flat abrupt-change data in the corrected runoff sequence as the missing data, and after linear interpolation is performed, obtain a final runoff sequence after two times of correction. $qx_{9574}$, $qx_{9575},...,$ $qx_{9585}$ and $qx_{24874}$, $qx_{24875},...,$ $qx_{24881}$ are denoted as missing data, and linear interpolation is performed on the missing data of $qx_j$, $j$ = 1,..., $n$, to obtain a runoff sequence after two times of correction. FIG. 5 is a schematic diagram of runoff data after a second time of correction.

In the method for processing runoff abnormal abrupt-change data provided in the embodiments of the present invention, runoff observation data of a target research region within a preset historical time period is acquired, and the runoff observation data is sorted by time to obtain a first runoff observation data sequence; first-order differential processing is performed on the first runoff observation data sequence, to obtain a first first-order differential runoff observation data sequence; runoff abnormal abrupt-change data is determined in the first first-order differential runoff observation data sequence based on a preset runoff abnormal abrupt-change data filtering condition; and the runoff abnormal abrupt-change data is corrected. In this method, an abnormal abrupt-change point is recognized by setting an abrupt-change point window threshold and a fold-change threshold of a first-order differential sequence, and data correction is performed by using a linear interpolation method, to implement efficient and precise recognition and correction of runoff sequence abnormal abrupt-change data, thereby improving the cleaning and quality control efficiency of runoff abnormal abrupt-change data.

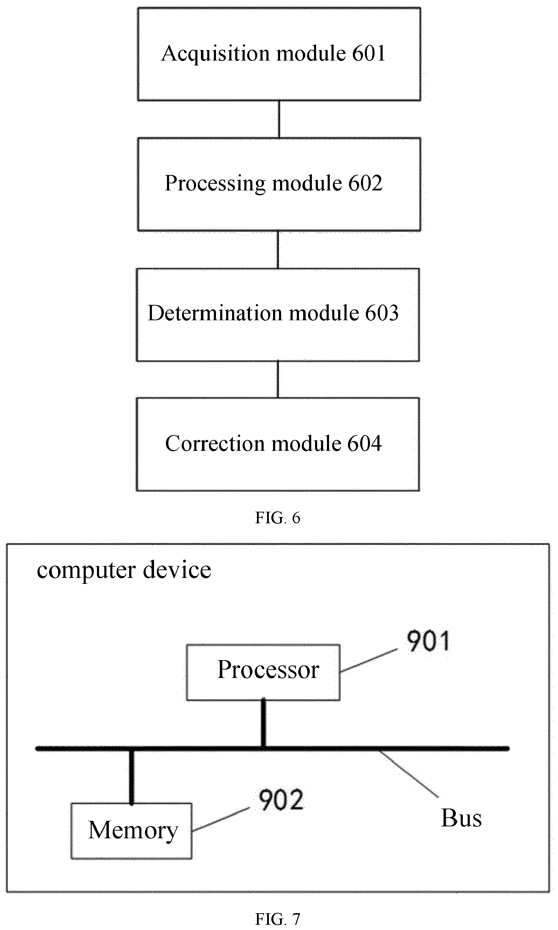

FIG. 6 is a schematic structural diagram of an apparatus for processing runoff abnormal abrupt-change data according to an embodiment of the present invention. As shown in FIG. 6, the apparatus includes an acquisition module, a processing module, a determination module, and a correction module.

The acquisition module is configured to acquire runoff observation data of a target research region within a preset historical time period, and sort the runoff observation data by time to obtain a first runoff observation data sequence. For detailed description, reference may be to the related description corresponding to the foregoing embodiments. Details are not described herein again

The processing module is configured to perform first-order differential processing on the first runoff observation data sequence, to obtain a first first-order differential runoff observation data sequence. For detailed description, reference may be to the related description corresponding to the foregoing embodiments. Details are not described herein again

The determination module is configured to determine runoff abnormal abrupt-change data in the first first-order differential runoff observation data sequence based on a preset runoff abnormal abrupt-change data filtering condition. For detailed description, reference may be to the related description corresponding to the foregoing embodiments. Details are not described herein again

The correction module is configured to correct the runoff abnormal abrupt-change data. For detailed description, reference may be to the related description corresponding to the foregoing embodiments. Details are not described herein again

The apparatus for processing runoff abnormal abrupt-change data provided in the embodiments of the present invention is configured to perform the method for processing runoff abnormal abrupt-change data provided in the foregoing embodiments, and has the same implementation manner and principle as the method. For detailed content, reference may be to the related description of the foregoing embodiments. Details are not described again.

FIG. 7 shows a computer device according to an embodiment of the present invention. As shown in FIG. 7, the computer device may include a processor 901 and a memory 902. The processor 901 and the memory 902 may be connected by a bus or in another manner. A bus connection is used as an example in FIG. 7.

The processor 901 may be a central processing unit (CPU). The processor 901 may be another general-purpose processor, digital signal processor (DSP), application-specific integrated circuit (ASIC), field-programmable gate array (FPGA) or another programmable logic device, discrete gate or transistor logic device, a discrete hardware component, among other chips, or a combination of the foregoing various types of chips.

The memory 902 is used as a non-transitory computer-readable storage medium, and may be configured to store non-transitory software programs, non-transitory computer-executable programs, and modules, for example, program instructions/modules corresponding to the method provided in the embodiments of the present invention. The processor 901 runs the non-transitory software programs, instructions, and modules stored in the memory 902 to perform various functional applications and data processing of the processor, that is, implement the method in the foregoing method embodiments.

The memory 902 may include a program storage area and a data storage area. The program storage area may store an operating system and an application required for at least one function. The data storage area may store data created by the processor 901. Moreover, the storage 902 may include a high-speed random access memory (RAM), and may further include a non-transitory storage, for example, at least one magnetic disk storage device, flash storage device, or other non-transitory solid state storage device. In some embodiments, the memory 902 optionally includes memories disposed remotely with respect to the processor 901. These remote memories may be connected to the processor 901 by a network. An example of the foregoing network includes, but not limited to, the internet, an intranet, a local area network, a mobile communication network, and a combination thereof.

One or more modules are stored in the memory 902, and perform, when being executed by the processor 901, the method in the foregoing method embodiments.

For specific details of the foregoing computer device, reference may be correspondingly made to related description and effects corresponding to the foregoing method embodiments for understanding. Details are not described herein again.

A person skilled in the art may understand that all or a part of the procedures in the methods of the embodiments may be implemented by a computer program instructing relevant hardware. The program may be stored in a computer-readable storage medium. The program is executed to perform the procedures in the foregoing embodiments of the methods. The storage medium may be a magnetic disk, an optical disc, a read-only memory (ROM), a RAM, a flash memory, a hard disk drive (HDD) or a solid-state drive (SSD) or the like. The storage medium may include a combination of the memories of the foregoing types.

Although the embodiments of the present invention are described in conjunction with the accompanying drawings, various modifications and variations may be made by those skilled in the art without departing from the spirit and scope of the present invention, and such modifications and variations fall within the scope defined by the appended claims.

**Claims**

1. A method for processing runoff abnormal abrupt-change data, **characterized by** comprising:

    acquiring runoff observation data of a target research region within a preset historical time period, and sorting the runoff observation data by time to obtain a first runoff observation data sequence;
    performing first-order differential processing on the first runoff observation data sequence, to obtain a first first-order differential runoff observation data sequence;
    presetting a fold-change threshold and an abrupt-change window threshold;

    denoting a third quartile of the first first-order differential runoff observation data sequence $y_j^1$ as $y_{Q_3}^1$, and if a first formula is satisfied, wherein the first formula is $|y_j^1| \geq y_{Q_3}^1, |y_{j+1}^1| \geq y_{Q_3}^1, y_j^1 \times y_{j+1}^1 < 0$ ,
    denoting $j$ as an abrupt-change point moment, and recording all abrupt-change point moments satisfying the first formula into a set *HopSet;*

classifying all abrupt-change points into an upward abrupt-change point and a downward abrupt-change point, and for $\forall k \in HopSet$, if $\exists j$, $k - WinSize \leq j \leq k + WinSize$, and a second formula is satisfied, wherein the second formula is

$$|y_j^1| \geq FoldNum \times y_{Q_3}^1 ,$$

under a condition $y_j^1 < 0, \; y_{j+1}^1 > 0$, applying:

$$M = max\{m: y_{k-1}^1 \leq -y_{Q_3}^1, y_{k-2}^1 \leq -y_{Q_3}^1, \ldots, y_{k-m}^1 \leq -y_{Q_3}^1, 1 \leq m \leq WinSize\}$$

a third formula, and

$$N = max\{n: y_{k+1}^1 \geq y_{Q_3}^1, y_{k+2}^1 \geq y_{Q_3}^1, \ldots, y_{k+n}^1 \geq y_{Q_3}^1, 1 \leq n \leq WinSize\}$$

a fourth formula;

under a condition $y_j^1 > 0, \; y_{j+1}^1 < 0$, applying:

$$M = max\{m: y_{k-1}^1 \geq y_{Q_3}^1, y_{k-2}^1 \geq y_{Q_3}^1, \ldots, y_{k-m}^1 \geq y_{Q_3}^1, 1 \leq m \leq WinSize\}$$

a fifth formula, and

$$N = max\{n: y_{k+1}^1 \leq -y_{Q_3}^1, y_{k+2}^1 \leq -y_{Q_3}^1, \ldots, y_{k+n}^1 \leq -y_{Q_3}^1, 1 \leq n \leq WinSize\}$$

a sixth formula

adding $\{k - M, k - M + 1, \ldots, k - 1\}$ and $\{k + 1, k + 2, \ldots, k + N\}$ into a moment set *TopIndex* of top abrupt-change points, wherein runoff data corresponding to a moment in the set *TopIndex* is top abrupt-change data;

labeling the top abrupt-change data as first missing data;

correcting the first missing data by using a linear interpolation method, to obtain a corrected second runoff observation data sequence;

performing first-order differential processing on the second runoff observation data sequence, to obtain a second first-order differential runoff observation data sequence;

denoting a third quartile of

$$qy_j^1$$

in the second first-order differential runoff observation data sequence as

$$qy_{Q_3}^1 ,$$

and if a seventh formula is satisfied, wherein the seventh formula is

$$|qy_j^1| \geq FoldNum \times qy_{Q_3}^1 ,$$

denoting all *j* satisfying the seventh formula as a flat abrupt-change point moment set *FlatSet;*

denoting

$$FlatSet = \{j_1, j_2, \ldots, j_r\} ,$$

wherein there are a total of *t* moments, and for $k \in \{1, 2, \ldots, t\}$, letting $k = 1$:

 Step 1: considering a set

$$\{j_k, \ldots, j_t\}, \quad r \in \{k, \ldots, t\} ,$$

and if an eighth formula is satisfied, wherein the eighth formula is:

$$j_r \leq j_k + 4 \times WinSize,$$

a set of all r satisfying the eighth formula is denoted as

$$\{k_1, \ldots, k_s\},$$

Step 2: calculating

$$k_M = max\{r: qy_{j_k}^1 \times qy_{j_r}^1 < 0, r = k_1, \ldots, k_s\},$$

Step 3: adding $j_k$ and $j_{k_M}$ into a flat abrupt-change point set *FlatIndex;* and
Step 4: letting *k = k + M + 1,* wherein *M* is a rank of $k_M$ in $\{k_1, \ldots, k_s\}$, and repeating Steps 1 to 3 until *k > t,* wherein runoff data corresponding to a moment in the set *FlatIndex* is flat abrupt-change data, and the number of elements in the set *FlatIndex* is an even number;
denoting the number of elements in *FlatIndex* as *2N,* denoting

$$FlatIndex = \{t_1, \ldots, t_{2N}\},$$

and for

$$\forall l \in \{1, 2, \ldots, N\},$$

labeling

$$qx_{t_{2l-1}}, qx_{t_{2l-1}+1}, \ldots, qx_{t_{2l}}$$

as second missing data; and
performing linear interpolation on the second missing data of

$$qx_j, j = 1, \ldots, n,$$

to obtain a corrected third runoff observation data sequence.

2. An apparatus for processing runoff abnormal abrupt-change data, **characterized by** comprising:

an acquisition module, configured to acquire runoff observation data of a target research region within a preset historical time period, and sort the runoff observation data by time to obtain a first runoff observation data sequence;
a processing module, configured to perform first-order differential processing on the first runoff observation data sequence, to obtain a first first-order differential runoff observation data sequence;
a determination module, configured to preset a fold-change threshold and an abrupt-change window threshold; denote a third quartile of the first first-order differential runoff observation data sequence

$$y_j^1$$

as

$$y_{Q_2}^1,$$

and if a first formula is satisfied, wherein the first formula is:

$$|y_j^1| \geq y_{Q_2}^1, |y_{j+1}^1| \geq y_{Q_2}^1, y_j^1 \times y_{j+1}^1 < 0,$$

denote *j* as an abrupt-change point moment, and recording all abrupt-change point moments satisfying the first formula into a set *HopSet;* classify all abrupt-change points into an upward abrupt-change point and a downward abrupt-change point, and for

$$\forall k \in HopSet,$$

if

$$\exists j, \quad k - WinSize \leq j \leq k + WinSize,$$

and a second formula is satisfied, wherein the second formula is

$$|y_j^1| \geq FoldNum \times y_{Q_2}^1,$$

under a condition

$$y_j^1 < 0, \quad y_{j+1}^1 > 0,$$

apply:

$$M = max\{m: y_{k-1}^1 \leq -y_{Q_2}^1, y_{k-2}^1 \leq -y_{Q_2}^1, \ldots, y_{k-m}^1 \leq -y_{Q_2}^1, 1 \leq m \leq WinSize\}$$

a third formula, and

$$N = max\{n: y_{k+1}^1 \geq y_{Q_2}^1, y_{k+2}^1 \geq y_{Q_2}^1, \ldots, y_{k+n}^1 \geq y_{Q_2}^1, 1 \leq n \leq WinSize\}$$

a fourth formula;
under a condition

$$y_j^1 > 0, \quad y_{j+1}^1 < 0$$

,

apply:

$$M = max\{m: y_{k-1}^1 \geq y_{Q_3}^1, y_{k-2}^1 \geq y_{Q_3}^1, \ldots, y_{k-m}^1 \geq y_{Q_3}^1, 1 \leq m \leq WinSize\}$$

a fifth formula, and

$$N = max\{n: y_{k+1}^1 \leq -y_{Q_3}^1, y_{k+2}^1 \leq -y_{Q_3}^1, \ldots, y_{k+n}^1 \leq -y_{Q_3}^1, 1 \leq n \leq WinSize\}$$

a sixth formula
add $\{k - M, k - M + 1,\ldots,k - 1\}$ and $\{k + 1, k + 2,\ldots,k + N\}$ into a moment set *TopIndex* of top abrupt-change points, wherein runoff data corresponding to a moment in the set *TopIndex* is top abrupt-change data; label the top abrupt-change data as first missing data; perform first-order differential processing on a second runoff observation data sequence, to obtain a second first-order differential runoff observation data sequence; denote a third quartile of

$$qy_j^1$$

in the second first-order differential runoff observation data sequence as

$$qy_{Q_3}^1$$

and if a seventh formula is satisfied, wherein the seventh formula is

$$|qy_j^1| \geq FoldNum \times qy_{Q_3}^1$$

,

denote all *j* satisfying the seventh formula as a flat abrupt-change point moment set *FlatSet;* denote

$$FlatSet = \{j_1, j_2, \ldots, j_t\}$$

,

wherein there are a total of *t* moments, and for

$$k \in \{1, 2, \ldots, t\}$$

,

let *k* = 1: Step 1: considering a set

$$\{j_k, \ldots, j_t\}, \quad r \in \{k, \ldots, t\}$$

,

and if an eighth formula is satisfied, wherein the eighth formula is:

$$j_r \le j_k + 4 \times WinSize$$ ,

a set of all r satisfying the eighth formula is denoted as

$$\{k_1, \ldots, k_s\}$$ ,

Step 2: calculating

$$k_M = max\{r: qy_{j_k}^1 \times qy_{j_r}^1 < 0, r = k_1, \ldots, k_s\}$$ ,

Step 3: adding $j_k$ and $j_{k_M}$ into a flat abrupt-change point set *FlatIndex;* and Step 4: letting $k = k + M + 1$, wherein $M$ is a rank of $k_M$ in

$$\{k_1, \ldots, k_s\}$$ ,

and repeating Steps 1 to 3 until $k > t$, wherein runoff data corresponding to a moment in the set *FlatIndex* is flat abrupt-change data, and the number of elements in the set *FlatIndex* is an even number;
a correction module, configured to correct the first missing data by using a linear interpolation method, to obtain a corrected second runoff observation data sequence; denote the number of elements in *FlatIndex* as *2N,* denote *FlatIndex* = $\{t_1, \ldots, t_{2N}\}$, and for $\forall l \in \{1, 2, \ldots, N\}$, label $qx_{t_{2l-1}}, qx_{t_{2l-1}+1}, \ldots, qx_{t_{2l}}$ as second missing data; and perform linear interpolation on the second missing data of $qx_j, j = 1, \ldots, n$, to obtain a corrected third runoff observation data sequence.

3. A computer device, **characterized by** comprising: a processor and a memory, wherein the processor is configured to execute a program for processing runoff abnormal abrupt-change data stored in the memory to implement the method for processing runoff abnormal abrupt-change data according to claim 1.

4. A storage medium, with one or more programs stored therein, **characterized in that** the one or more programs are executable by one or more processors, to implement the method for processing runoff abnormal abrupt-change data according to claim 1.

| | |
|---|---|
| Acquire runoff observation data of a target research region within a preset historical time period, and sorting the runoff observation data by time to obtain a first runoff observation data sequence | S11 |
| Perform first-order differential processing on the first runoff observation data sequence, to obtain a first first-order differential runoff observation data sequence | S12 |
| Determine runoff abnormal abrupt-change data in the first first-order differential runoff observation data sequence based on a preset runoff abnormal abrupt-change data filtering condition | S13 |
| Correct the runoff abnormal abrupt-change data | S14 |

FIG. 1

Preset a fold-change threshold and an abrupt-change window threshold     S21

Determine an abrupt-change point satisfying a preset condition in the first first-order differential runoff observation data sequence based on the fold-change threshold and the abrupt-change window threshold     S22

Determine an abrupt-change type of the abrupt-change point, and perform calculation based on an algorithm corresponding to the abrupt-change type, to obtain top abrupt-change data     S23

Label the top abrupt-change data as first missing data     S24

Correct the first missing data by using a linear interpolation method, to obtain a corrected second runoff observation data sequence     S25

Perform first-order differential processing on a second runoff observation data sequence, to obtain a second first-order differential runoff observation data sequence     S26

Determine flat abrupt-change data in the second first-order differential runoff observation data sequence based on the fold-change threshold and the abrupt-change window threshold     S27

Label the flat abrupt-change data as second missing data     S28

Correct the second missing data by using a linear interpolation method, to obtain a corrected third runoff observation data sequence     S29

FIG. 2

FIG. 3

FIG. 4

FIG. 5

Acquisition module 601

Processing module 602

Determination module 603

Correction module 604

FIG. 6

computer device

Processor — 901

902

Memory

Bus

FIG. 7

Europäisches
Patentamt

European
Patent Office

Office européen
des brevets

# EUROPEAN SEARCH REPORT

Application Number

EP 22 20 7243

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 286 924 A (CHINA INST WATER RESOURCES & HYDROPOWER RES) 29 January 2021 (2021-01-29) * Steps S1-S7 * | 1-4 | INV. G06F17/18 |
| X | CN 113 780 657 A (CHINA THREE GORGES CORP; UNIV TSINGHUA) 10 December 2021 (2021-12-10) * Steps S101-S1034 * | 1-4 | |
| A | CN 106 708 694 B (TENCENT TECH SHENZHEN CO LTD) 19 June 2020 (2020-06-19) * figure 1 * | 1-4 | |
| A | AOQIAN ZHANG ET AL: "Time series data cleaning", PROCEEDINGS OF THE VLDB ENDOWMENT; [ACM DIGITAL LIBRARY], ASSOC. OF COMPUTING MACHINERY, NEW YORK, NY, vol. 10, no. 10, 1 June 2017 (2017-06-01), pages 1046-1057, XP058372447, ISSN: 2150-8097 * the whole document * | 1-4 | |

TECHNICAL FIELDS SEARCHED (IPC)

G06F

The present search report has been drawn up for all claims

| Place of search | Date of completion of the search | Examiner |
|---|---|---|
| Berlin | 27 June 2023 | Virnik, Elena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 20 7243

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2023

| Patent document cited in search report | | Publication date | Patent family member(s) | Publication date |
|---|---|---|---|---|
| CN 112286924 | A | 29-01-2021 | NONE | |
| CN 113780657 | A | 10-12-2021 | NONE | |
| CN 106708694 | B | 19-06-2020 | NONE | |

EPO FORM P0459

For more details about this annex : see Official Journal of the European Patent Office, No. 12/82